# EUROPEAN PATENT APPLICATION

(11) **EP 3 685 932 A1**
(43) Date of publication of application: **29.07.2020**
(21) Application number: 17932644.2
(22) Date of filing: 24.11.2017
(51) Int. Cl.: B21D 1/02, B21C 51/00, C23C 2/40

(54) **DEVICE FOR MEASURING SHAPE OF METAL PLATE, PLATE WARPAGE CORRECTION DEVICE, CONTINUOUS PLATING EQUIPMENT, AND PLATE WARPAGE CORRECTION METHOD FOR METAL PLATE**

(71) Applicant: Primetals Technologies Japan, Ltd., Hiroshima-shi, Hiroshima 733-8553 (JP)
(72) Inventor: YONEKURA, Takashi, Hiroshima-shi Hiroshima 733-8553 (JP); TAMBARA, Masao, Hiroshima-shi Hiroshima 733-8553 (JP); YOSHIKAWA, Masashi, Tokyo 108-8215 (JP)
(74) Representative: Strehl Schübel-Hopf & Partner
(86) International application number: PCT/JP2017/042180
(87) International publication number: WO 2019/102578

(57) **Abstract**

A shape measurement device for a metal plate includes a plurality of distance sensors including one or more first sensors disposed on a first side and a plurality of second sensors disposed on a second side, of the metal plate with respect to a thickness direction of the metal plate, across a pass line of the metal plate. The one or more first sensors are positioned, with respect to a width direction of the metal plate, between a pair of second sensors disposed adjacent to each other in the width direction.

## Description

### TECHNICAL FIELD

The present disclosure relates to a shape measurement apparatus and a warpage correction apparatus for a metal strip, and a warpage correction method for a metal strip.

### BACKGROUND

In a facility for continuously processing a metal plate in strip form, the shape of the metal strip is often measured in order to correct and flatten the warpage of the metal strip.

For example, Patent Document 1 discloses a warpage correction apparatus including a plurality of pairs of electromagnets and distance sensors, in which the electromagnet and the distance sensor in each pair are arranged at the same position in a width direction of a steel strip, and the pairs are aligned in the strip width direction on either side of the steel strip so as to face each other. By adjusting an electromagnetic force acting on the steel strip by the electromagnets based on detection results of the distance sensors, the warpage of the steel strip can be corrected.

### Citation List

### Patent Literature

Patent Document 1: JP2017-13114A

### SUMMARY

### Problems to be Solved

As described in Patent Document 1, the shape including warpage of a metal strip (steel strip) can be measured by distance sensors disposed on opposite sides of the metal strip. However, it is desired to further improve the accuracy of measurement of shape of a metal strip.

In view of the above, an object of at least one embodiment of the present invention is to provide a shape measurement apparatus and a warpage correction apparatus for a metal strip, and a warpage correction method for a metal strip whereby it is possible to improve the accuracy of measurement of shape of a metal strip.

### Solution to the Problems

A shape measurement apparatus for a metal strip according to at least one embodiment of the present invention comprises a plurality of distance sensors including one or more first sensors and a plurality of second sensors disposed on both sides of a metal strip in the strip thickness direction, respectively, across a pass line of the metal strip, in which the one or more first sensors are positioned, with respect to the strip width direction, between a pair of the second sensors adjacent in the strip width direction.

### Advantageous Effects

According to at least one embodiment of the present invention, there is provided a shape measurement apparatus and a warpage correction apparatus for a metal strip, and a warpage correction method for a metal strip whereby it is possible to improve the accuracy of measurement of shape of a metal strip.

### BRIEF DESCRIPTION OF DRAWINGS

FIG. 1 is a schematic configuration diagram of a continuous plating facility according to an embodiment.
FIG. 2 is a diagram of the continuous plating facility shown in FIG. 1 when viewed from the direction A.
FIG. 3 is a schematic diagram of a shape measurement apparatus according to an embodiment when viewed in a conveying direction of a metal strip.
FIG. 4 is a schematic diagram of a shape measurement apparatus according to an embodiment when viewed in a conveying direction of a metal strip.
FIG. 5 is a schematic diagram of a shape measurement apparatus according to an embodiment when viewed in a conveying direction of a metal strip.
FIG. 6 is a schematic diagram of a shape measurement apparatus according to an embodiment when viewed in a conveying direction of a metal strip.
FIG. 7 is a schematic diagram of a typical shape measurement apparatus when viewed in a conveying direction of a metal strip.
FIG. 8 is a schematic diagram of a typical shape measurement apparatus when viewed in a conveying direction of a metal strip.
FIG. 9 is a flowchart of a warpage correction method according to an embodiment.
FIG. 10 is a flowchart of a warpage correction method according to an embodiment.

### DETAILED DESCRIPTION

Embodiments of the present invention will now be described in detail with reference to the accompanying drawings. It is intended, however, that unless particularly identified, dimensions, materials, shapes, relative positions and the like of components described in the embodiments shall be interpreted as illustrative only and not intended to limit the scope of the present invention.

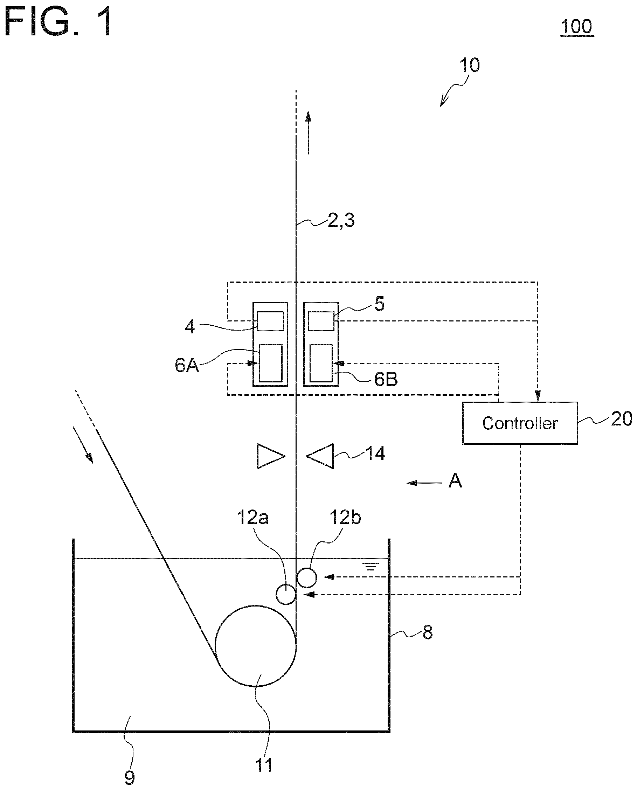

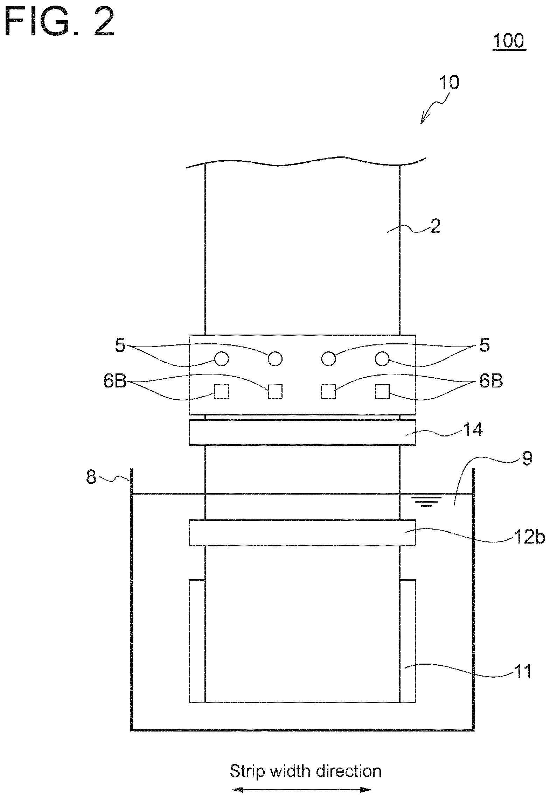

First, with reference to FIGs. 1 and 2, a continuous heat treatment facility to which a shape measurement apparatus and a warpage correction apparatus for a metal strip according to some embodiments are applied will be described.

FIG. 1 is a schematic configuration diagram of a continuous plating facility 100 according to an embodiment. FIG. 2 is a diagram of the continuous plating facility 100 shown in FIG. 1 when viewed from the direction A.

As shown in FIGs. 1 and 2, the continuous plating facility 100 is a facility for continuously plating a metal plate 2 in strip form (e.g., steel strip) and includes a furnace (not shown) for heat treatment of the metal strip 2, a pot 8 (molten metal pot) disposed outside the furnace and forming a plating bath 9, and a wiping nozzle 14 for adjusting the amount of a plating solution (molten metal) adhering to the metal strip 2. Further, the continuous plating facility 100 includes a warpage correction apparatus 10.

The arrow in FIG. 1 represents a conveying direction of the metal strip 2 (moving direction; hereinafter, also simply referred to as "conveying direction").

The pot 8 stores molten metal as the plating solution and forms a plating bath 9.

In the case where the metal strip 2 is a steel strip, the molten metal stored in the pot 8 may be, but not limited to, zinc, aluminum, or an alloy containing them.

The pot 8 contains a sink roll 11. The metal strip 2 subjected to heat treatment in the furnace is introduced into the plating bath 9 outside the furnace and directed upward by the sink roll 11, so that the metal strip 2 with the molten metal adhering thereto moves above the pot 8.

The wiping nozzle 14 is disposed downstream of the sink roll 11 with respect to the conveying direction of the metal strip 2 (hereinafter, also simply referred to as "downstream").

The wiping nozzle 14 may extend along the width direction of the metal strip 2 (hereinafter, also simply referred to as "strip width direction") and include a slit opening to the pass line of the metal strip 2. The wiping nozzle 14 is configured to jet a gas to the traveling metal strip 2, for example through the slit, to wipe and remove the molten metal excessively adhering to the metal strip 2 so as to make the thickness of the molten metal on the surface of the metal strip 2 uniform.

The warpage correction apparatus 10 includes a shape measurement apparatus 1 for measuring the shape of the metal strip 2, a plurality of electromagnets 6A, 6B for generating an electromagnetic force applied to the metal strip 2, a correction roll 12a, 12b, and a controller 20. The electromagnetic force generated by the electromagnets 6A, 6B may be a suction force applied to the metal strip 2 to correct the shape, such as warpage, of the metal strip 2, or to reduce the vibration of the metal strip 2.

Here, the "warpage" of the metal strip 2 may be warpage in the strip width direction (warpage in which a widthwise center projects in the strip thickness direction relative to both widthwise ends; i.e., crossbow warpage, or C-warp).

The shape measurement apparatus 1 includes a plurality of distance sensors. The shape measurement apparatus 1 includes one or more first sensors 4 disposed on one side of the metal strip 2 in the thickness direction of the metal strip 2 (hereinafter, also simply referred to as "strip thickness direction") and a plurality of second sensors 5 disposed on the other side of the metal strip 2, across a pass line 3 of the metal strip 2. In the exemplary embodiment shown in FIGs. 1 and 2, the plurality of distance sensors includes a plurality of first sensors 4 and a plurality of second sensors 5 each of which is arranged along the strip width direction of the metal strip 2.

The plurality of distance sensors is configured to detect the distance between the metal strip 2 and each of the distance sensors. The distance sensor may be an electromagnetic or laser distance sensor.

Since the plurality of first sensors 4 and the plurality of second sensors 5 of the shape measurement apparatus 1 are each arranged along the strip width direction, by detecting the distance between the metal strip 2 and each distance sensor at multiple positions in the strip width direction, it is possible to evaluate the shape of the metal strip 2.

The plurality of electromagnets 6A, 6B includes a pair of electromagnets 6A, 6B, one on each side of the metal strip 2 in the strip thickness direction across the pass line 3 of the metal strip 2. As shown in FIG. 2, multiple sets of electromagnets 6A, 6B may be arranged along the strip width direction.

Each electromagnet 6A, 6B is configured to apply a suction force to the metal strip 2. When the metal strip 2 warps or vibrates, each electromagnet 6A, 6B generates an appropriate suction force according to the shape of the metal strip 2, which makes it possible to correct the warpage of metal strip 2 or to reduce the vibration. For instance, by adjusting the balance of suction force of the electromagnets 6A, 6B on both sides according to the degree of bending of the metal strip 2 at multiple positions in the strip width direction, it is possible to correct the warpage of the metal strip 2.

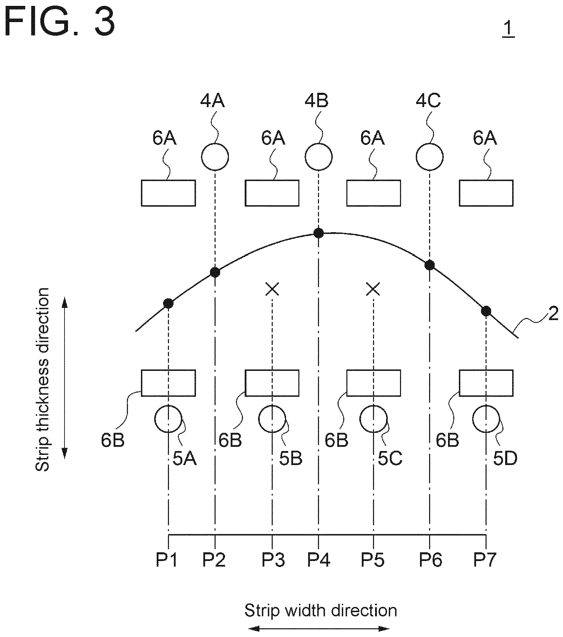

In the exemplary embodiment shown in FIG. 3, since the electromagnets are disposed so as to face each other across the pass line of the metal strip, the balance of suction force can be adjusted by generating or increasing an electromagnetic force on an electromagnet to which the metal strip needs to be brought closer, or eliminating or decreasing an electromagnetic force on an electromagnet to which the metal strip does not need to be brought closer.

The first sensor 4 and the second sensor 5 of the shape measurement apparatus 1 may be disposed downstream or upstream of the plurality of electromagnets 6A, 6B. In the exemplary embodiment shown in FIGs. 1 and 2, the first sensors 4 and the second sensors 5 are disposed downstream of the plurality of electromagnets 6A, 6B.

The distance sensor (first sensor 4 or second sensor 5) and the electromagnet 6A or 6B disposed on the same side of the pass line 3 of the metal strip 2 may be accommodated in the same casing (not shown).

The correction roll 12a, 12b is a roll for correcting the warpage of the metal strip 2. The correction roll 12a, 12b may be able to adjust the pressing amount toward the metal strip 2 (i.e. the rotation axis of each correction roll 12a, 12b may be movable). By appropriately adjusting the pressing amount of the correction roll 12a, 12b to plastically deform the metal strip 2, the warpage of the metal strip 2 may be corrected.

Although, in the exemplary embodiment shown in FIG. 1 and 2, a pair of correction rolls 12a, 12b is disposed across the metal strip 2 in the pot 8 of the plating bath 9 downstream of the sink roll 11, in some embodiments, the correction roll may be disposed upstream of the sink roll 11 with respect to the conveying direction of the metal strip 2 (hereinafter, also simply referred to as "upstream"). Further, in some embodiments, the correction roll may be disposed outside the pot 8 or outside the plating bath 9. Further, in some embodiments, the correction roll may be a single roll.

If the metal strip 2 has warpage in the strip width direction at the position of the wiping nozzle 14 downstream of the sink roll 11, the distance between the wiping nozzle 14 and the metal strip 2 is varied in the strip width direction. As a result, the removal amount of the molten metal (plating solution) by the wiping nozzle 14 becomes non-uniform in the strip width direction depending on the distance between the wiping nozzle 14 and the metal strip 2. For instance, as the wiping nozzle 14 is distant from the metal strip 2, the removal amount of the molten metal (plating solution) by the wiping nozzle 14 decreases, so that the plating thickness increases. Conversely, as the wiping nozzle 14 is close to the metal strip 2, the removal amount of the molten metal (plating solution) by the wiping nozzle 14 increases, so that the plating thickness decreases. Thus, when the plating thickness is not uniform, the plating thickness increases more than necessary for ensuring the plating at the thinnest portion, which may lead to an increase in cost. Further, the plating thickness variation on the metal strip 2 may lead to uneven weldability (weld strength) at the time of welding the metal strip in a subsequent process, reducing the quality of a product of the metal strip 2.

Therefore, by correcting the warpage of the metal strip 2 using the electromagnets 6A, 6B and the correction roll 12a, 12b, it is possible to achieve uniform adhesion (plating thickness) of the molten metal on the surface of the metal strip 2 having passed through the wiping nozzle 14.

The controller 20 may include a shape calculation unit configured to calculate the shape of the metal strip 2 based on detection results of the first sensor 4 and the second sensor 5, an estimation unit configured to estimate the position of the metal strip 2, or a control unit configured to correct the warpage of the metal strip 2.

The detection result regarding the position of the metal strip 2 used to control the warpage correction may be obtained by a control sensor disposed corresponding to the electromagnet 6A, 6B among the plurality of sensors including the first sensor 4 and the second sensor 5. The control sensor is a sensor for adjusting the suction force of the electromagnet 6A, 6B, and may be at the same position in the width direction as the electromagnet 6A, 6B corresponding to the control sensor. The detection result regarding the position of the metal strip 2 detected by the control sensor may be sent to the controller 20 and used to control the suction force of the electromagnet 6A, 6B by the controller 20.

The controller 20 may be configured to perform a warpage correction method for the metal strip 2, which will be described later.

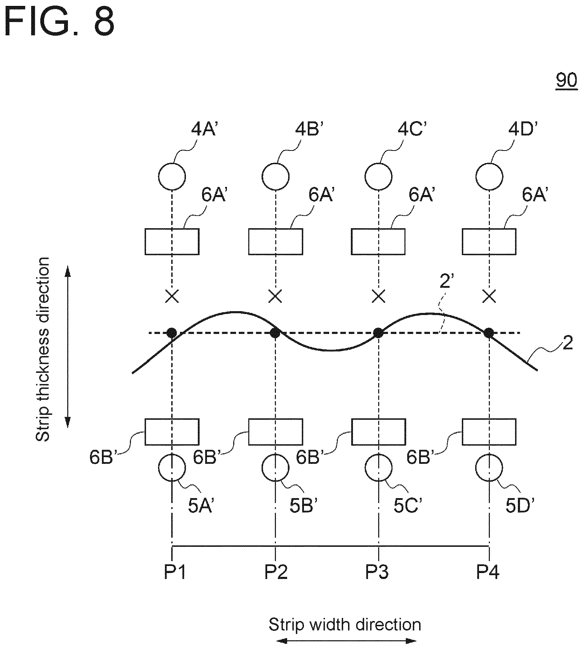

Next, with reference to FIGs. 3 and 8, the shape measurement apparatus 1 according to some embodiments will be described in more detail.

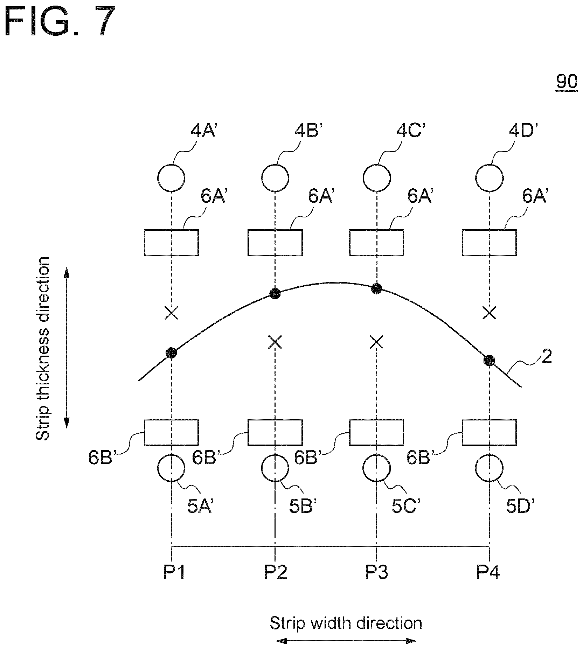

FIGs. 3 to 6 are a schematic diagram of the shape measurement apparatus 1 according to an embodiment when viewed in the conveying direction of the metal strip 2. FIGs. 7 and 8 are a schematic diagram of a typical shape measurement apparatus 90 when viewed in the conveying direction of the metal strip 2.

FIGs. 3 to 8 are a diagram for mainly describing a positional relationship of the plurality of distance sensors and the electromagnets 6A, 6B of the shape measurement apparatus 1, 90 in the strip width direction, and components not present in the description are not depicted.

Further, the shape measurement apparatuses 1 shown in FIGs. 3, 4, and 6 have the same apparatus configuration.

In FIGs. 3 to 8, the plurality of first sensors 4 arranged in the strip width direction includes first sensors 4A, 4B, 4C, ..., which are collectively referred to as the first sensor 4.

Similarly, in FIGs. 3 to 8, the plurality of second sensors 5 arranged in the strip width direction includes second sensors 5A, 5B, 5C, ..., which are collectively referred to as the second sensor 5.

Points P1, P2, P3... in FIGs. 3 to 8 indicate the position of each distance sensor (first sensor 4, second sensor 5, etc.) in the strip width direction, i.e., the detection position of the metal strip 2 by each distance sensor.

Further, in FIGs. 3 to 7, the cross mark indicates the limit of the measurable range of the distance sensor located at the same position in the strip width direction, where the position of the metal strip 2 cannot be detected by the corresponding distance sensor (e.g., second sensors 5B, 5C in FIG. 3).

In some embodiments, as shown in FIGs. 3 to 6, the first sensor 4 of the plurality of distance sensors of the shape measurement apparatus 1 is positioned, with respect to the strip width direction of the metal strip 2, between a pair of second sensors 5 adjacent in the strip width direction, when the metal strip 2 is viewed from the strip thickness direction of the metal strip 2. In other words, the widthwise positions of the distance sensor on the front side and the distance sensor on the back side of the metal strip 2 do not coincide.

For instance, in FIGs. 3 to 6, the first sensor 4A is disposed, with respect to the strip width direction, between the second sensor 5A and the second sensor 5B, which are adjacent in the strip width direction. Similarly, with respect to the strip width direction, the first sensor 4B is disposed between the second sensor 5B and the second sensor 5C, and the first sensor 4C is disposed between the second sensor 5C and the second sensor 5D. In other words, in the shape measurement apparatus 1 shown in FIGs. 3 to 6, all distance sensors disposed on the opposite side from the second sensors 5A to 5D across the pass line 3 of the metal strip 2 are the first sensors 4A to 4C disposed offset from the second sensors 5A to 5D in the strip width direction.

Here, the measurable distance range of the distance sensor to a measurement target (herein, metal strip 2) is limited. Therefore, when the metal strip 2 is deformed, e.g., warped, the distance between some distance sensors and the metal strip 2 may exceed the measurable range depending on the degree of deformation, so that the position of the metal strip 2 cannot be detected by the distance sensors.

In this regard, in the above embodiments, as shown in FIGs. 3 to 6, since the first sensor 4 and the second sensor 5 are disposed on both sides in the strip thickness direction, it is possible to enlarge the measurement range of the plurality of distance sensors in the strip thickness direction, compared to the case where the distance sensors are disposed on one side in the strip thickness direction.

In the typical shape measurement apparatus 90 shown in FIGs. 7 and 8, a pair of distance sensors (e.g., distance sensor 4A' and distance sensor 5A') is disposed at the same position in the strip width direction so as to face each other across the pass line 3 of the metal strip 2. In this case, position measurement points of the metal strip 2 in the strip width direction measured by, in total, eight distance sensors 4A' to 4D' and 5A' to 5D' are half (four) of the number of sensors.

In contrast, in the above embodiments, as shown in FIGs. 3 to 6, the first sensor 4 is positioned, with respect to the strip width direction of the metal strip 2, between a pair of second sensors 5 adjacent in the strip width direction, and the metal strip 2 is detected at seven points in the strip width direction by seven distance sensors including three first sensors 4A to 4C and four second sensors 5A to 5D.

In this way, since the first sensor 4 and the second sensor 5 are offset from each other in the strip width direction, it is possible to increase the position measurement points on the metal strip 2 in the strip width direction, compared to when not offset (for example, see FIG. 7). Consequently, it is possible to improve the accuracy of shape measurement of the metal strip 2.

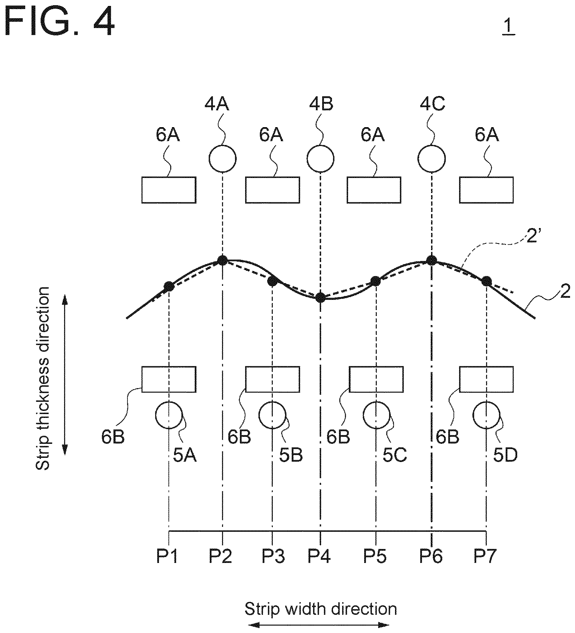

In the case where the metal strip 2 has a complex curved shape including multiple curves in different projecting directions with respect to the strip thickness direction (e.g., shape shown by the solid line in FIG. 4 or 8), if the number of position measurement points in the strip width direction by the distance sensors 4', 5' aligned in the strip width direction is small as shown in FIG. 8, the shape of the metal strip 2 may be evaluated as flat as shown by the dashed line in FIG. 8. If the shape of the metal strip 2 is evaluated as a different shape than the actual one, the warpage of the metal strip 2 cannot be appropriately corrected based on measurement results by the distance sensors.

In contrast, according to the embodiments shown in FIGs. 3 to 6, since the positions of the first sensor 4 and the second sensor 5 are offset from each other in the strip width direction, it is possible to increase the position measurement points on the metal strip 2 in the strip width direction. Thus, even when the metal strip 2 has a complex curved shape including multiple curves in different projecting directions with respect to the strip thickness direction, the complex curved shape of the metal strip 2 can be appropriately evaluated as shown by the dashed line in FIG. 4, for example. Thus, according to the above embodiments, it is possible to improve the accuracy of shape measurement of the metal strip 2.

In some embodiments, as shown in FIGs. 3 to 6, at least one of the plurality of distance sensors 4, 5 is disposed at a position offset in the strip width direction from the electromagnet 6A, 6B for generating an electromagnetic force applied to the metal strip 2. In the exemplary embodiments shown in FIGs. 3 to 6, all first sensors 4 are disposed at a position offset from the electromagnets 6A, 6B in the strip width direction.

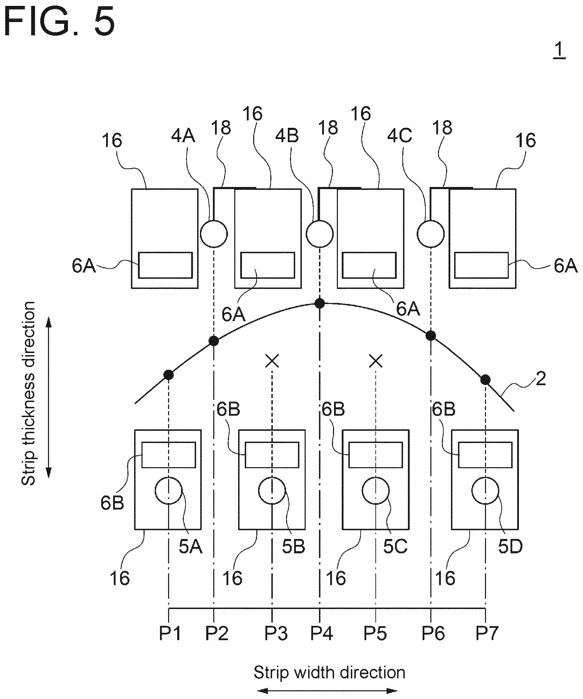

In the exemplary embodiment shown in FIG. 5, each of the electromagnets 6A, 6B is accommodated in a corresponding casing 16. Further, among the distance sensors, each second sensor 5 corresponding to a pair of electromagnets 6A, 6B is disposed at the same position as the pair of electromagnets 6A, 6B in the strip width direction, and the second sensor 5 and the electromagnet 6B are accommodated in the same casing 16. Additionally, among the distance sensors, each first sensor 4 is mounted to the casing 16 that accommodates the electromagnet 6A via an attachment member 18 so as to be positioned, with respect to the strip width direction of the metal strip 2, between a corresponding pair of second sensors 5 adjacent in the strip width direction.

In the exemplary embodiments shown in FIGs. 3 to 6, each second sensor 5 disposed at the same position as the pair of electromagnets 6A, 6B is the above-described control sensor used to control the electromagnet 6A, 6B.

In some embodiments, at least one of the plurality of distance sensors including the first sensor 4 and the second sensor 5 may be movable in the strip width direction or the strip thickness direction.

Further, in some embodiments, the control sensor of the plurality of distance sensors including the first sensor 4 and the second sensor 5 may be movable in the strip width direction or the strip thickness direction together with the electromagnet 6A or the electromagnet 6B corresponding to the control sensor.

For example, in the exemplary embodiment shown in FIG. 5, the second sensor 5 which is the control sensor disposed corresponding to the electromagnet 6A, 6B may be movable in the strip width direction or the strip thickness direction together with the electromagnet 6B corresponding to the second sensor 5 and the casing 16 that accommodates the second sensor 5 and the electromagnet 6B.

Moving means for moving the distance sensor in the strip width direction or the strip thickness direction may be any means. For example, the moving means may include an actuator such as an electric actuator or a hydraulic actuator, and a guide member for guiding the distance sensor to be moved in a desired direction.

The position of the electromagnet 6A or the electromagnet 6B in the strip width direction may be variable in accordance with change in width of the metal strip 2 or movement of the metal strip 2 itself in the strip width direction. In this case, information indicating the position of the electromagnet 6A or the electromagnet 6B may be input to the controller 20, for instance, manually, or by a sensor for detecting an edge of the metal strip 2, or by a device for moving the electromagnet 6A, 6B. The controller 20 may calculate the position of the electromagnet 6A, 6B in the strip width direction, and the position of the distance sensor in the strip width direction corresponding to the electromagnet 6A, 6B, based on the positional information thus input. Thus, it is possible to determine the positions of the electromagnet 6A, 6B and the distance sensor corresponding to the electromagnet 6A, 6B in the strip width direction.

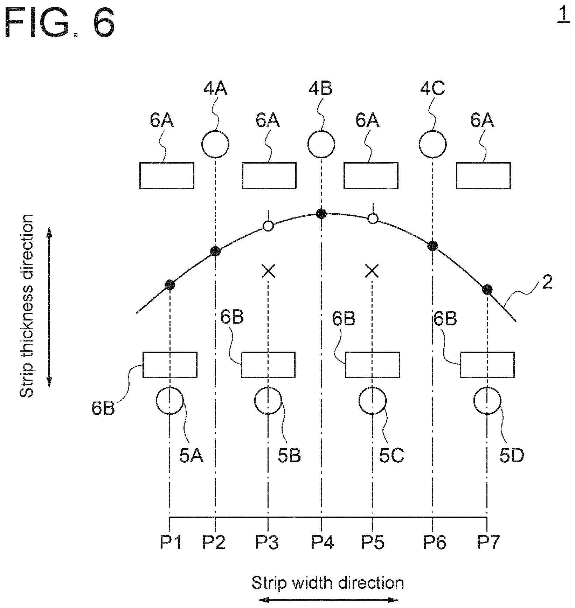

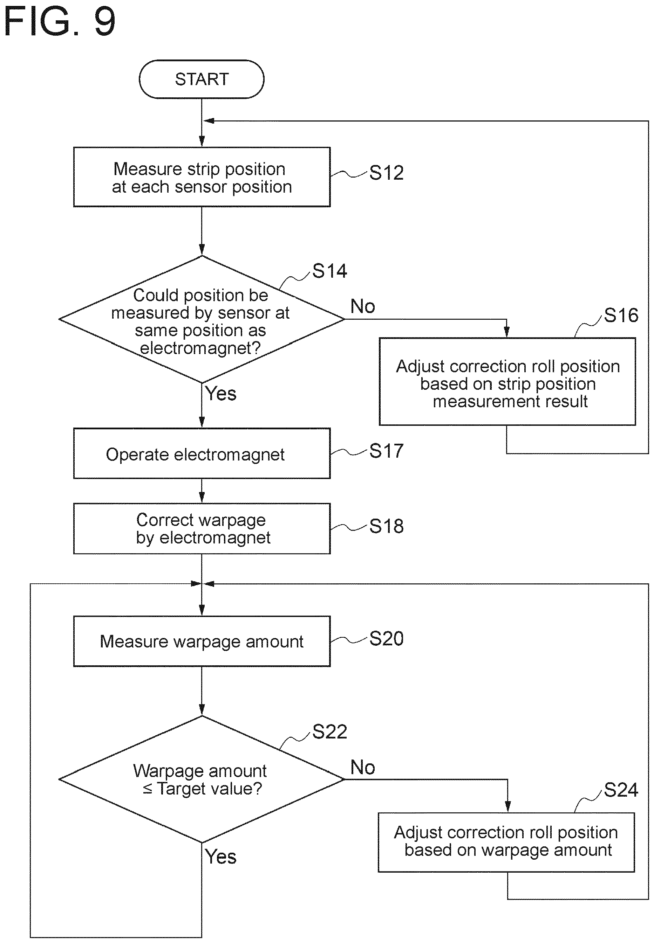

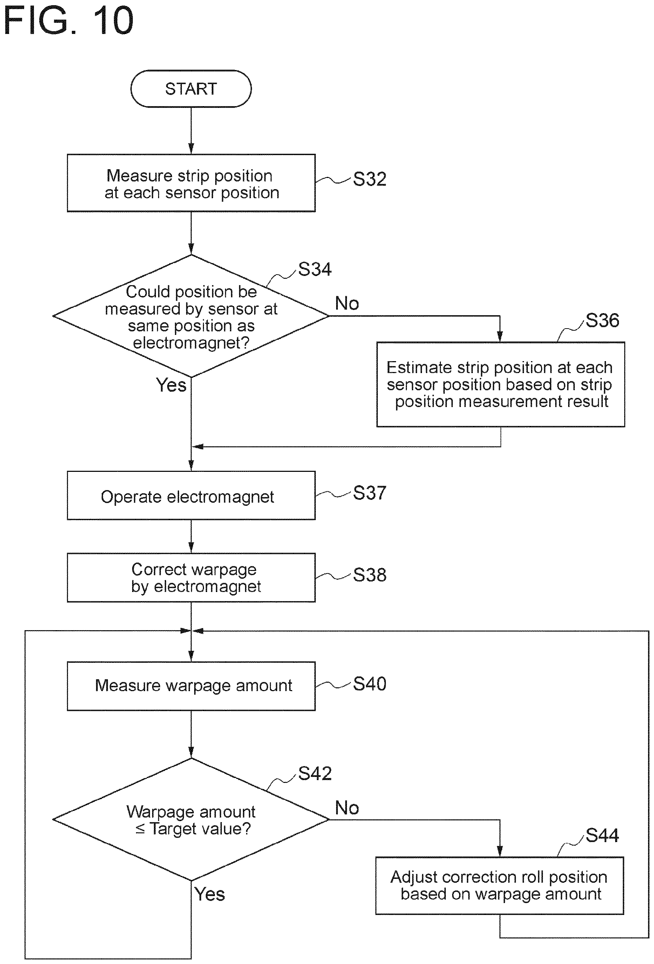

Next, with reference to FIGs. 9 and 10, the warpage correction method according to some embodiments will be described. FIGs. 9 and 10 are a flowchart of the warpage correction method according to an embodiment. In the following, the case of performing the warpage correction method using the shape measurement apparatus 1 shown in FIG. 6 will be described. The warpage correction method described below may be performed by the controller 20 (see FIG. 1).

At the start of the warpage correction method shown in FIGs. 9 and 10, the plurality of electromagnets 6A, 6B for generating an electromagnetic force applied to a metal strip are not operating. This is because, if the metal strip 2 largely warps in the strip width direction and is too close to any of the plurality of electromagnets 6A, 6B, and the electromagnet 6A, 6B is operated in this state, the electromagnet 6A, 6B may come into contact with the metal strip 2, preventing proper conveyance of the metal strip 2. Therefore, in the warpage correction method shown in FIGs. 9 and 10, the electromagnets 6A, 6B are appropriately operated according to the procedure of steps S12 to S17 (see FIG. 9) or S32 to S37 (see FIG. 10) described below.

In the warpage correction method shown in the flowchart of FIG. 9, first, with the plurality of distance sensors including the first sensor 4 and the second sensor 5 of the shape measurement apparatus 1 shown in FIG. 6, the position of the metal strip 2 (i.e., distance between the distance sensor and the metal strip 2) is measured at strip-widthwise position P1 to P7 of each of the first sensors 4A to 4C and the second sensors 5A to 5D (step S12).

Here, each of the second sensors 5A to 5D is a control sensor disposed corresponding to each pair of electromagnets 6A, 6B.

Then, it is determined whether any of the second sensors 5A to 5D, which are the control sensors corresponding to the electromagnets 6A, 6B among the plurality of distance sensors, is positioned outside the measurable range with respect to the metal strip 2 in the strip thickness direction (i.e., whether the position of the metal strip 2 could be measured by each of the second sensors 5A to 5D) (step S14).

If any of the second sensors 5A to 5D is determined to be positioned outside the measuring range with respect to the metal strip 2 (No in step S14), the warpage of the metal strip 2 is corrected using the correction roll 12a, 12b, based on a detection result of the distance sensor positioned within the measuring range with respect to the metal strip 2 (step S16).

In the example shown in FIG. 6, in step S14, it is determined that, among the second sensors 5A to 5D, the second sensors 5B and 5C cannot detect the position of the metal strip 2, so that the second sensors 5B and 5C are positioned outside the measurable range. Then, in step S16, the warpage of the metal strip 2 is corrected using the correction roll 12a, 12b, based on detection results of the first sensors 4A to 4C and the second sensors 5A and 5D, which are positioned within the measurable range with respect to the metal strip 2.

In step S16, the warpage of the metal strip 2 may be reduced by adjusting the pressing amount of the correction roll 12a, 12b toward the metal strip 2 based on detection results of the distance sensors.

By repeatedly performing steps S12 to S16 multiple times as necessary, the warpage of the metal strip 2 is reduced. As a result, in step S14, it is determined that all second sensors 5A to 5D are positioned within the measurable range with respect to the metal strip 2 (Yes in step S14). In this case, the electromagnets 6A, 6B for generating an electromagnetic force applied to the metal strip are operated (step S17).

In this way, after the electromagnets 6A, 6B are appropriately operated, a current applied to the electromagnets 6A, 6B is controlled based on detection results of the plurality of distance sensors including the first sensors 4A to 4C and the second sensors 5A to 5D to adjust a suction force (electromagnetic force) applied to the metal strip 2 by each electromagnet 6A, 6B. Thereby, the warpage of the metal strip 2 is corrected (step S18).

Further, the warpage amount of the metal strip 2 is measured by the plurality of distance sensors including the first sensors 4A to 4C and the second sensors 5A to 5D, and the warpage amount is adjusted by the correction roll 12a, 12b until the warpage amount is equal to or less than a target value (steps S20 to S24).

Herein, the warpage amount of the metal strip 2 may be a difference between maximum and minimum positions in the strip thickness direction of the metal strip 2, among positions on the metal strip 2 at the strip-widthwise positions P1 to P7.

The warpage correction by the electromagnet 6A, 6B is based on elastic deformation of the metal strip 2, which can rapidly correct the warpage of the metal strip 2 by changing the magnitude of suction force generated by the electromagnet 6A, 6B, but the effect of correcting the warpage by elastic deformation is attenuated with increasing distance from the magnet.

Meanwhile, the warpage correction by the correction roll 12a, 12b is based on plastic deformation of the metal strip 2. This takes time to adjust the position of the correction roll 12, 12b for controlling (reducing) the warpage amount, but the warpage reduced by plastic deformation applied to the metal strip 2 is maintained in the whole region downstream of the correction roll.

In this regard, according to the warpage correction method of the flowchart shown in FIG. 9, since the warpage correction by the electromagnet 6A, 6B and the warpage correction by the correction roll 12a, 12b are appropriately combined, it is possible to effectively reduce the warpage of the metal strip 2.

In the warpage correction method shown in the flowchart of FIG. 10, first, with the plurality of distance sensors including the first sensor 4 and the second sensor 5 of the shape measurement apparatus 1 shown in FIG. 6, the position of the metal strip 2 (i.e., distance between the distance sensor and the metal strip 2) is measured at the strip-widthwise position P1 to P7 of each of the first sensors 4A to 4C and the second sensors 5A to 5D (step S32).

Each of the second sensors 5A to 5D is a control sensor disposed corresponding to each pair of electromagnets 6A, 6B.

Then, it is determined whether any of the second sensors 5A to 5D, which are the control sensors corresponding to the electromagnets 6A, 6B among the plurality of distance sensors, is positioned outside the measurable range with respect to the metal strip 2 in the strip thickness direction (i.e., whether the position of the metal strip 2 could be measured by each of the second sensors 5A to 5D) (step S34).

If any of the second sensors 5A to 5D is determined to be positioned outside the measuring range with respect to the metal strip 2 (No in step S34), the position of the metal strip 2 at the strip-widthwise position of the distance sensor that is determined to be positioned outside the measurable range in step S34 is estimated based on a detection result of the distance sensor positioned within the measuring range with respect to the metal strip 2 (i.e., the distance between the distance sensor positioned outside the measurable range and the metal strip 2 is estimated; step S36).

In the example shown in FIG. 6, in step S34, it is determined that, among the second sensors 5A to 5D, the second sensors 5B and 5C cannot detect the position of the metal strip 2, so that the second sensors 5B and 5C are positioned outside the measurable range. Then, in step S36, the positions (indicated by the white circle in FIG. 6) of the metal strip 2 at the strip-widthwise positions of the second sensors 5B and 5C are estimated based on detection results of the first sensors 4A to 4C and the second sensors 5A and 5D, which are positioned within the measurable range with respect to the metal strip 2.

Then, the electromagnets 6A, 6B for generating an electromagnetic force applied to the metal strip 2 are operated (step S37), and a current applied to the electromagnets 6A, 6B is controlled based on estimation results in step S36 to adjust a suction force (electromagnetic force) applied to the metal strip 2 by the electromagnets 6A, 6B. Thereby, the warpage of the metal strip 2 is corrected (step S38).

Further, the warpage amount of the metal strip 2 is measured by the plurality of distance sensors including the first sensors 4A to 4C and the second sensors 5A to 5D, and the warpage amount is adjusted by the correction roll 12a, 12b until the warpage amount is equal to or less than a target value (steps S40 to S44).

According to the warpage correction method of the flowchart shown in FIG. 10, since the shape of the metal strip 2 is estimated in step S36 based on detection results of the distance sensors obtained in steps S32 to 34, it is possible to rapidly reduce the warpage of the metal strip 2 by rapidly operating the electromagnets 6A, 6B without repeating the process such as adjustment of pressing amount of the correction roll 12a, 12b.

Hereinafter, the outline of the shape measurement apparatus 1, the warpage correction apparatus 10, the continuous plating facility 100, and the warpage correction method for the metal strip 2 according to some embodiments will be described.
(1) A shape measurement apparatus according to at least one embodiment of the present invention comprises a plurality of distance sensors including one or more first sensors disposed on one side of the metal strip in a strip thickness direction and a plurality of second sensors disposed on the other side of the metal strip across a pass line of the metal strip, wherein the one or more first sensors are positioned, with respect to a strip width direction of the metal strip, between a pair of the second sensors adjacent in the strip width direction.
   The measurable distance range of a distance sensor to a measurement target is limited. In this regard, with the above configuration (1), since the first sensor and the second sensor are disposed on both sides in the thickness direction of the metal strip (hereinafter, also simply referred to as "strip thickness direction"), respectively, across the pass line of the metal strip, it is possible to enlarge the measurement range of the plurality of distance sensors in the strip thickness direction, compared to the case where the distance sensors are disposed on one side in the strip thickness direction. Further, in the above configuration (1), one or more first sensors are disposed between a pair of second sensors adjacent in the width direction of the metal strip (hereafter, also simply referred to as "strip width direction"). In other words, the positions of the first sensor and the second sensor are separated in the strip width direction, which makes it possible to increase the position measurement points on the metal strip in the strip width direction. Accordingly, it is possible to improve the accuracy of shape measurement of the metal strip.
   The "plurality of distance sensors" may include a distance sensor other than the first sensor and the second sensor. In other words, the first sensor and a distance sensor other than the first sensor may be disposed on one side of the metal strip in the strip thickness direction. In this case, the position of the distance sensor other than the first sensor in the strip width direction may coincide with any of the plurality of second sensors disposed on the other side of the metal strip in the strip thickness direction.
   In some embodiments, in the above configuration (1), at least one of the plurality of distance sensors is disposed at a position offset in the strip width direction from an electromagnet for generating an electromagnetic force applied to the metal strip.
   In the case of using an electromagnet for generating an electromagnetic force applied to the metal strip, generally, the electromagnetic force generated by the electromagnet is controlled based on a detection result of a distance sensor disposed at the same position as the electromagnet in the strip width direction. In the above configuration, at least one of the plurality of distance sensors is disposed at a position offset in the strip width direction from the electromagnet for generating an electromagnetic force applied to the metal strip. Thus, since the distance sensor is also disposed at a position offset from the electromagnet in the strip width direction, it is possible to increase the position measurement points of the metal strip in the strip width direction, compared to the case where the distance sensor is disposed only at the same position as the electromagnet in the strip width direction. Accordingly, it is possible to improve the accuracy of shape measurement of the metal strip.
(2) In some embodiments, in the above configuration (1), at least one of the plurality of distance sensors is configured to be movable in the strip width direction or the strip thickness direction.
   For example, in the case where a traveling metal strip is the shape measurement target, if the width of the metal strip changes in the middle or the metal strip meanders, the positions of distance sensors may not match the extension range of the metal strip in the strip width direction. In this regard, with the above configuration (2), since at least one of the distance sensors is movable in the strip width direction or the strip thickness direction, even if the distance sensor is positioned in a location where the position of the metal strip cannot be detected, by appropriately moving the distance sensor in the strip width direction or the strip thickness direction, it is possible to accurately measure the shape of the metal strip without increasing the number of distance sensors.
(3) In some embodiments, in the above configuration (1) or (2), all distance sensors positioned on an opposite side to the plurality of second sensors across the pass line are the first sensors disposed at a position offset in the strip width direction from the second sensors, respectively.
   With the above configuration (3), since all distance sensors disposed on the opposite side from the plurality of second sensors across the pass line are offset from the second sensors in the strip width direction, it is possible to increase the position measurement points of the metal strip in the strip width direction by a relatively small number of distance sensors. Accordingly, it is possible to improve the accuracy of shape measurement of the metal strip while reducing the installation cost.
(4) A warpage correction apparatus according to at least one embodiment of the present invention comprises: the shape measurement apparatus in any one of the above (1) to (3); a plurality of electromagnets for generating an electromagnetic force applied to the metal strip; and a control unit for correcting warpage of the metal strip. The plurality of distance sensors includes at least one control sensor corresponding to at least one of the plurality of electromagnets, respectively. The control unit is configured, based on a detection result of the at least one control sensor, to control a current applied to the at least one electromagnet to adjust an electromagnetic force applied to the metal strip by the at least one electromagnet.
   With the above configuration (4), since the electromagnetic force applied to the metal strip can be adjusted based on a detection result of the control sensor corresponding to the electromagnet, it is possible to correct the shape of the metal strip by providing an appropriate electromagnetic force to the electromagnet.
(5) In some embodiments, in the above configuration (4), at least one of the plurality of distance sensors is disposed at a position offset in the strip width direction from an electromagnet for generating an electromagnetic force applied to the metal strip.
   In the case of using an electromagnet for generating an electromagnetic force applied to the metal strip, generally, the electromagnetic force generated by the electromagnet is controlled based on a detection result of a distance sensor disposed at the same position as the electromagnet in the strip width direction. In the above configuration (5), at least one of the plurality of distance sensors is disposed at a position offset in the strip width direction from the electromagnet for generating an electromagnetic force applied to the metal strip. Thus, since the distance sensor is also disposed at a position offset from the electromagnet in the strip width direction, it is possible to increase the position measurement points of the metal strip in the strip width direction, compared to the case where the distance sensor is disposed only at the same position as the electromagnet in the strip width direction. Accordingly, it is possible to improve the accuracy of shape measurement of the metal strip.
(6) In some embodiments, in the above configuration (4) or (5), the control sensor is configured to be movable in the strip width direction or the strip thickness direction together with the electromagnet corresponding to the control sensor.
   With the above configuration (6), since the control sensor is movable together with the electromagnet corresponding to the control sensor, it is possible to reduce the installation cost for means for moving the distance sensors, compared to the case where the control sensor and the electromagnet are separately movable.
(7) In some embodiments, in any one of the above configurations (4) to (6), the warpage correction apparatus further comprises a correction roll, disposed upstream of the plurality of distance sensors in a conveying direction of the metal strip, for correcting warpage of the metal strip, and the control unit is configured to adjust a pressing amount of the correction roll toward the metal strip, based on a detection result of the plurality of distance sensors.
   With the above configuration (7), by adjusting the pressing amount of the correction roll toward the metal strip based on a detection result of the distance sensors, it is possible to correct the warpage of the metal strip.
(8) In some embodiments, in the above configuration (7), the warpage correction apparatus further comprises an estimation unit configured to estimate a position of the metal strip at a position, with respect to the strip width direction, of each of the plurality of electromagnets, based on a detection result of the plurality of distance sensors, and the control unit is configured, based on an estimation result of the estimation unit, to control a current applied to the plurality of electromagnets to adjust an electromagnetic force applied to the metal strip by the electromagnets.
   With the above configuration (8), since the position of the metal strip at the strip-widthwise position of each of the electromagnets is estimated based on a detection result of the plurality of distance sensors, and a current applied to the electromagnet is controlled based on this estimation result to adjust the electromagnetic force applied to the metal strip, it is possible to appropriately correct the shape of the metal strip.
(9) A continuous plating facility according to at least one embodiment of the present invention comprises: the warpage correction apparatus described in any one of the above (4) to (8).
   With the above configuration (9), since the first sensor and the second sensor are disposed on both sides in the strip thickness direction of the metal strip, respectively, across the pass line of the metal strip, it is possible to enlarge the measurement range of the plurality of distance sensors in the strip thickness direction, compared to the case where the distance sensors are disposed on one side in the strip thickness direction. Further, in the above configuration (9), one or more first sensors are disposed between a pair of second sensors adjacent in the strip width direction of the metal strip. In other words, since the positions of the first sensor and the second sensor are separated in the strip width direction, it is possible to increase the position measurement points on the metal strip in the strip width direction. Accordingly, it is possible to improve the accuracy of shape measurement of the metal strip.
(10) A warpage correction method according to at least one embodiment of the present invention comprises: a step of detecting a warpage amount of the metal strip using the shape measurement apparatus described in any one of the above (1) to (3); and a step of controlling a current applied to at least one electromagnet based on a detection result of at least one control sensor of the plurality of distance sensors to adjust an electromagnetic force applied to the metal strip from the at least one electromagnet.
   With the above method (10), since the electromagnetic force applied to the metal strip can be adjusted based on a detection result of the control sensor corresponding to the electromagnet, it is possible to correct the shape of the metal strip by providing an appropriate electromagnetic force to the electromagnet.
(11) In some embodiments, the above method (10) further comprises: a step of, if any of the plurality of distance sensors is positioned outside a measurable range with respect to the metal strip in the strip thickness direction, correcting the metal strip by a correction roll based on the warpage amount obtained from a detection result of a distance sensor positioned within a measurable range with respect to the metal strip in the strip thickness direction; and a step of operating at least one electromagnet for generating an electromagnetic force applied to the metal strip when all of the plurality of distance sensors are positioned within measurable ranges with respect to the metal strip.
   As the warpage amount of the metal strip increases, the electromagnet for generating an electromagnetic force and the metal strip are likely to come into contact. To prevent such contact, the operation of the electromagnet is often limited.
   In this regard, with the above method (11), when any of the plurality of distance sensors is positioned outside a range capable of measuring the distance from the metal strip due to factors such as warpage of the metal strip, the warpage of the metal strip is corrected by the correction roll based on the warpage amount obtained from a detection result of the other distance sensor in a range capable of measuring the distance from the metal strip, so that the electromagnet for generating an electromagnetic force can be operated.
(12) In some embodiments, the above method (10) or (11) comprises: a step of, if any of the plurality of distance sensors is positioned outside a measurable range with respect to the metal strip in the strip thickness direction, estimating a position of the metal strip at a position, with respect to the strip width direction, of the distance sensor positioned outside the measurable range, based on a detection result of a distance sensor positioned within a measurable range with respect to the metal strip in the strip thickness direction; and a step of controlling a current applied to the at least one electromagnet based on an estimation result in the estimation step to adjust an electromagnetic force applied to the metal strip by the at least one electromagnet and correct warpage of the metal strip.

With the above method (12), when any of the plurality of distance sensors is positioned outside a range capable of measuring the distance from the metal strip due to factors such as warpage of the metal strip, the position of the metal strip at the strip-widthwise position of the distance sensor positioned outside the measurable range is estimated based on the warpage amount obtained from a detection result of the other distance sensor in a range capable of measuring the distance from the metal strip, and the warpage of the metal strip is corrected by the correction roll based on this estimation result. Thus, even when any of the plurality of distance sensors is positioned outside the measurable range, it is possible to appropriately correct the warpage of the metal strip.

Embodiments of the present invention were described in detail above, but the present invention is not limited thereto, and various amendments and modifications may be implemented.

Further, in the present specification, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

### Reference Signs List

- 1: Shape measurement apparatus
- 2: Metal strip
- 3: Pass line
- 4, 4A to 4C: First sensor (Distance sensor)
- 5, 5A to 5D: Second sensor (Distance sensor)
- 6A: Electromagnet
- 6B: Electromagnet
- 8: Pot
- 9: Plating bath
- 10: Warpage correction apparatus
- 11: Sink roll
- 12a: Correction roll
- 12b: Correction roll
- 14: Wiping nozzle
- 16: Casing
- 18: Attachment member
- 20: Controller
- 90: Shape measurement apparatus
- 100: Continuous plating facility

## Claims

1. A shape measurement apparatus for a metal strip, comprising a plurality of distance sensors including one or more first sensors disposed on one side of the metal strip in a strip thickness direction and a plurality of second sensors disposed on the other side of the metal strip across a pass line of the metal strip,
wherein the one or more first sensors are positioned, with respect to a strip width direction of the metal strip, between a pair of the second sensors adjacent in the strip width direction.

2. The shape measurement apparatus according to claim 1,
wherein at least one of the plurality of distance sensors is configured to be movable in the strip width direction or the strip thickness direction.

3. The shape measurement apparatus according to claim 1 or 2,
wherein all distance sensors positioned on an opposite side to the plurality of second sensors across the pass line are the first sensors disposed at a position offset in the strip width direction from the second sensors, respectively.

4. A warpage correction apparatus for a metal strip, comprising:
the shape measurement apparatus according to any one of claims 1 to 3;
a plurality of electromagnets for generating an electromagnetic force applied to the metal strip; and
a control unit for correcting warpage of the metal strip,
wherein the plurality of distance sensors includes at least one control sensor corresponding to at least one of the plurality of electromagnets, respectively, and
wherein the control unit is configured, based on a detection result of the at least one control sensor, to control a current applied to the at least one electromagnet to adjust an electromagnetic force applied to the metal strip by the at least one electromagnet.

5. The warpage correction apparatus according to claim 4,
wherein at least one of the plurality of distance sensors is disposed at a position offset in the strip width direction from an electromagnet for generating an electromagnetic force applied to the metal strip.

6. The warpage correction apparatus according to claim 4 or 5,
wherein the control sensor is configured to be movable in the strip width direction or the strip thickness direction together with the electromagnet corresponding to the control sensor.

7. The warpage correction apparatus according to any one of claims 4 to 6, further comprising:
a correction roll for correcting warpage of the metal strip, the correction roll being disposed upstream of the plurality of distance sensors in a conveying direction of the metal strip,
wherein the control unit is configured to adjust a pressing amount of the correction roll toward the metal strip, based on a detection result of the plurality of distance sensors.

8. The warpage correction apparatus according to claim 7, further comprising:
an estimation unit configured to estimate a position of the metal strip at a position, with respect to the strip width direction, of each of the plurality of electromagnets, based on a detection result of the plurality of distance sensors,
wherein the control unit is configured, based on an estimation result of the estimation unit, to control a current applied to the plurality of electromagnets to adjust an electromagnetic force applied to the metal strip by the electromagnets.

9. A continuous plating facility for a metal strip, comprising the warpage correction apparatus according to any one of claims 4 to 8.

10. A warpage correction method for a metal strip, comprising:
a step of detecting a warpage amount of the metal strip using the shape measurement apparatus according to any one of claims 1 to 3; and
a step of controlling a current applied to at least one electromagnet based on a detection result of at least one control sensor of the plurality of distance sensors to adjust an electromagnetic force applied to the metal strip by the at least one electromagnet.

11. The warpage correction method according to claim 10, further comprising:
a step of, if any of the plurality of distance sensors is positioned outside a measurable range with respect to the metal strip in the strip thickness direction, correcting the metal strip by a correction roll based on the warpage amount obtained from a detection result of a distance sensor positioned within a measurable range with respect to the metal strip in the strip thickness direction; and
a step of operating at least one electromagnet for generating an electromagnetic force applied to the metal strip when all of the plurality of distance sensors are positioned within measurable ranges with respect to the metal strip.

12. The warpage correction method according to claim 10 or 11, comprising:
a step of, if any of the plurality of distance sensors is positioned outside a measurable range with respect to the metal strip in the strip thickness direction, estimating a position of the metal strip at a position, with respect to the strip width direction, of the distance sensor positioned outside the measurable range, based on a detection result of a distance sensor positioned within a measurable range with respect to the metal strip in the strip thickness direction; and
a step of controlling a current applied to the at least one electromagnet based on an estimation result in the estimation step to adjust an electromagnetic force applied to the metal strip by the at least one electromagnet and correct warpage of the metal strip.
